# EUROPEAN PATENT APPLICATION

(11) **EP 2 193 916 A1**
(43) Date of publication of application: **09.06.2010**
(21) Application number: 09007336.2
(22) Date of filing: 03.06.2009
(51) Int. Cl.: B32B 27/40, A41D 31/00

(54) **Clothing and method of making the same**

(30) Priority: 05.12.2008 TW 97147466
(71) Applicant: Lin, Keng-Hsien, Hsiao-Kang Dist., Kaohsiung City (TW)
(72) Inventor: Lin, Keng-Hsien, Hsiao-Kang Dist., Kaohsiung City (TW)
(74) Representative: Kampfenkel, Klaus

(57) **Abstract**

A method of making an article of clothing includes: providing a plurality of sheet segments (30) each of which is made of a multi-layered material that includes a thermoplastic foamed layer (31), and a thermoplastic non-foamed layer (32) laminated on the foamed layer (31), each of the sheet segments (30) having at least one connection end (301); and assembling the sheet segments (30) to form the clothing by heat-sealing the connection ends (301) of the sheet segments (30), thereby forming heat-sealed seams (303) in the clothing.

## Description

This invention relates to an article of clothing and a method of making the clothing, more particularly to an article of clothing formed with heat-sealed seams.

There are several kinds of clothing for keeping users warm, for example, those disclosed in Taiwanese utility model nos. M251474, M27239S, M280068, M293683, M302909, and M338811.

In Taiwanese utility model no. M302909, an article of clothing 1 is made of a fabric material woven from fiber yarns 12 and stainless metal yarns 11 as shown in Figs . 1 and 2 . By electrically connecting the metal yarns 11 with a power supply 13, such as a battery unit, heat can be generated in the clothing 1 for warming the user who wears the clothing 1. The user of the clothing 1 can therefore feel comfortable even in a severe cold environment.

Although the clothing 1 can effectively keep the user warm, the supplement of power is difficult in high mountains or polar regions. Furthermore, the clothing 1 of the prior art that includes a plurality of sheet segments 15, 16 has several stitching seams 14 joining the sheet segments 15, 16, and thus, cold air, rain or snow can invade the clothing 1 through the stitching seams 14 thereof and thus reduce warming and water-proofing characteristics of the clothing 1.

Therefore, an object of the present invention is to provide an article of clothing and a manufacturing method thereof that can overcome the aforesaid drawbacks associated with the prior art.

According to one aspect of the present invention, there is provided a method of making an article of clothing, comprising: providing a plurality of sheet segments each of which is made of a multi-layered material that includes a thermoplastic foamed layer, and a thermoplastic non-foamed layer laminated on the foamed layer, each of the sheet segments having at least one connection end; and assembling the sheet segments to form the clothing by heat-sealing the connection ends of the sheet segments, thereby forming heat-sealed seams in the clothing.

According to another aspect of the present invention, there is provided an article of clothing made according to the aforesaid method, comprising a plurality of sheet segments made of a multi-layered material that includes a thermoplastic foamed layer, and a thermoplastic non-foamed layer laminated on the foamed layer; and heat-sealed seams where the sheet segments are interconnected to form the clothing.

Other features and advantages of the present invention will become apparent in the following detailed description of the preferred embodiments of the invention, with reference to the accompanying drawings, in which:

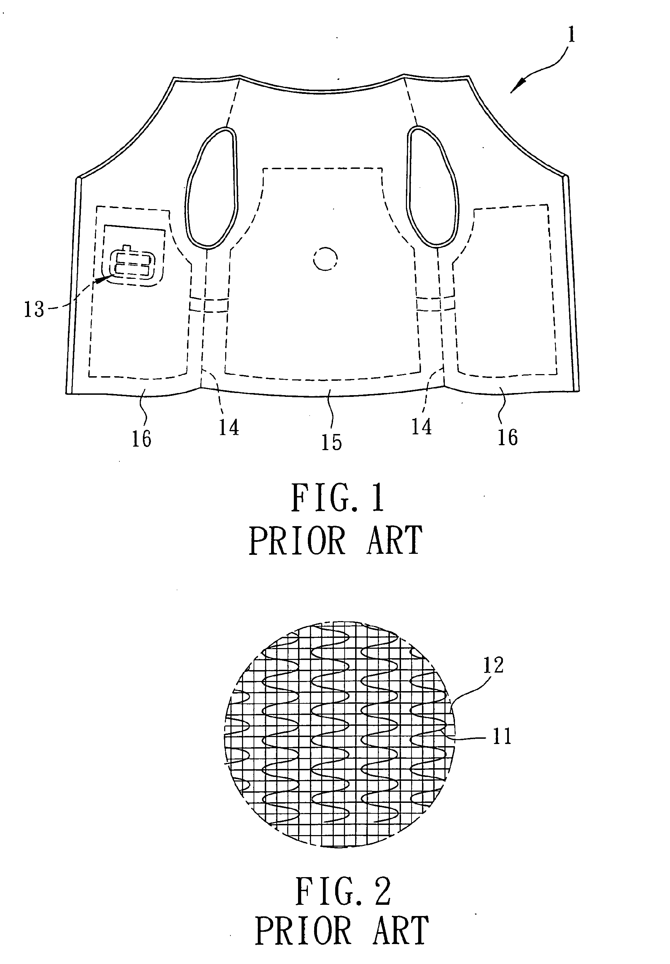

Fig. 1 is a schematic view illustrating an article of clothing disclosed in Taiwanese utility model no. M302909;
Fig. 2 is a fragmentary enlarged view illustrating a texture of the fabric in the clothing of Fig. 1;
Fig. 3 is a flow chart showing the first embodiment of a method of making an article of clothing according to lhe present invention;
Fig. 4 is a fragmentary cross-sectional view illustrating a multi-layered material used in the first embodiment of the present invention;
Fig. 5 is a fragmentary cross-sectional view illustrating beveled edge faces of two sheet segments for the clothing of the present invention;
Fig. 6 is a schematic view illustrating the clothing made by the method of the present invention and having an embossed pattern;
Fig. 7 is a fragmentary cross-sectional view illustrating a multi-layered material used according to the second embodiment of the present invention;
Fig. 8 is a fragmentary cross-sectional view illustrating a multi-layered material used according to the third embodiment of the present invention;
Fig. 9 is a schematic view illustrating an article of clothing with two cuffs and a waistband formed according to the present invention; and
Fig. 10 is a fragmentary cross-sectional view illustrating an alternative multi-layered material including an additional foamed layer thereon.
Fig. 11 is fragmentary cross-sectional view illustrating an alternative method for making the clothing of the present invention.

Before the present invention is described in greater detail with reference to the accompanying preferred embodiments, it should be noted herein that like elements are denoted by the same reference numerals throughout the disclosure .

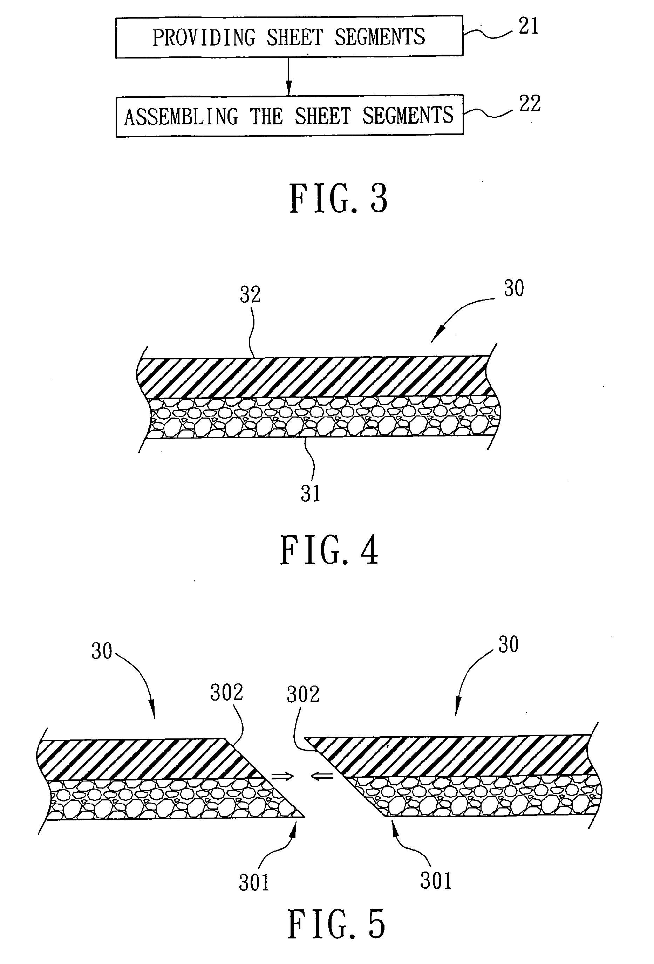

Referring to Figs. 3 to 5, the first embodiment of the method of making an article of clothing according the present invention comprises step 21 of providing sheet segments 30, *and* step 22 of assembling the sheet segments 30.

In step 21, a plurality of the sheet segments 30 are provided. Each of the sheet segments 3 0 is made of a multi-layered material that includes a thermoplastic foamed layer 31, and a thermoplastic first non-foamed layer 32 laminated on the foamed layer 31.

In each of the sheet segments 30, the first non-foamed layer 32 is made from a non-foamed thermoplastic polyurethane (TPU) sheet, and the foamed layer 31 is made from a foamed thermoplastic polyurethane (TPU) sheet. The first non-foamed TPU layer 32 has a smooth surface, whereas the foamed TPU layer 31 is porous. Preferably, the density of the foamed TPU layers 31 ranges from 0.1 to 0.8 g/cm . To form the multi-layered material, the foamed TPU layer 31 may be melt bonded to the first non-foamed TPU layer 32.

In step 22, the sheet segments 30 are assembled together by heat-sealing to form the clothing. Preferably, each sheet segment 30 has at least one connection end 301 that is provided with a beveled edge face 302 as shown in Fig. 5. During heat-sealing, the beveled edge faces 302 of the connection ends 301 of the sheet segments 30 are brought to abut against each other, and are thereafter melted and sealed to each other. After heat-sealing, heat-sealed seams are formed in the clothing. The heat-sealing may be conducted at 80-260 !'C for at least 3 seconds. The heat-sealing may be carried out through a hot-press sealing process, a high-frequency sealing process, or an ultrasonic sealing process.

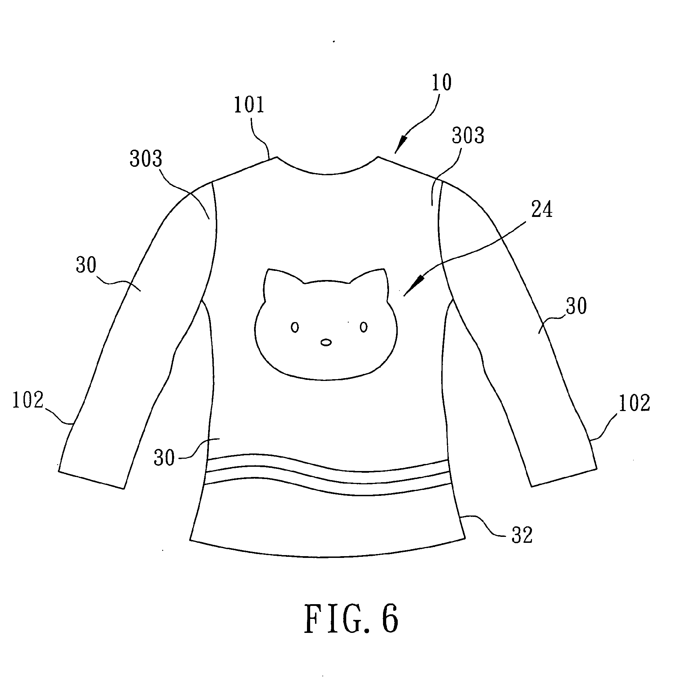

By the method of the first embodiment, a garment 10 is formed as shown in Fig. 6. The garment 10 includes a body portion 101, two sleeve portions 102, and heat-sealed seams 303. Each of the body portion 101 and the sleeve portions 102 is made from one or more sheet segments 30. The heat-sealed seams 303 are formed where the sheet segments 30 of the sleeve portions 102 are interconnected to those of the body portion 101.

Since the beveled edge faces 302 of the sheet segments 30 can provide a relatively large contact surface area for heat-sealing compared to a non-beveled edge face, high bonding strength can be achieved at the heat-sealed seams 303. Besides, because there are no stitch seams in the clothing, a problem in which moisture seeps through the stitch seams can be eliminated. In addition, the use of the heat-sealed seams in place of the conventional stitch seams can solve another problem in which the clothing is easily torn apart by pulling stresses at the stitch seams.

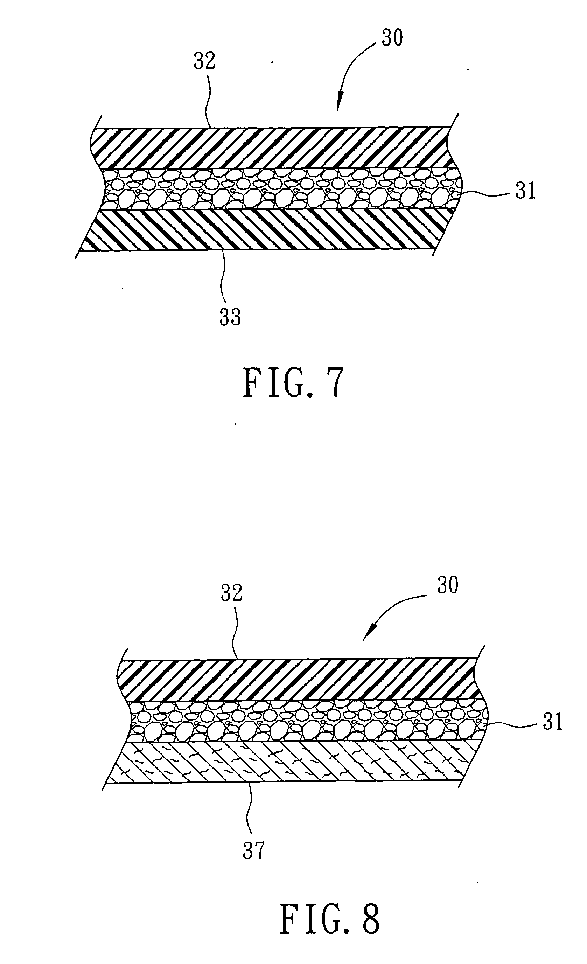

Fig. 7 illustrates a multi-layered material used according to the second embodiment of this invention, which differs from that of the first embodiment in that each sheet segment 30 further includes a thermoplastic second non-foamed layer 33. The foamed layer 31 is disposed between the first and second non-foamed layers 32, 33. The second non-foamed layer 33 is also made from a non-foamed thermoplastic polyurethane (TPU) sheet.

Fig. 8 illustrates a multi-layered material used according to the third embodiment of this invention, which differs from that of the first embodiment in that each sheet segment 30 further includes a fabric layer 37 made from fibers. The foamed layer 31 is disposed between the fabric layer 37 and the first non-foamed layer 32. In this embodiment, the fabric layer 37 and the foamed layer 31 are glued together. Of course, it is possible that all of the layers 31, 32, 37 are laminated together by melt bonding. The fabric layer 37 is made of a material selected from natural fiber, synthetic fiber, feather or fur of animals. The fabric layer 37 functions as a support for the clothing and prevents the clothing from deformation.

Optionally; the multi-layered material may be embossed to form an embossed pattern in at least one of the sheet segments 30 before the sheet segments 30 are assembled. As shown in Fig. 6, the sheet segment 30 of the body portion 101 has an embossed pattern 24 thereon.

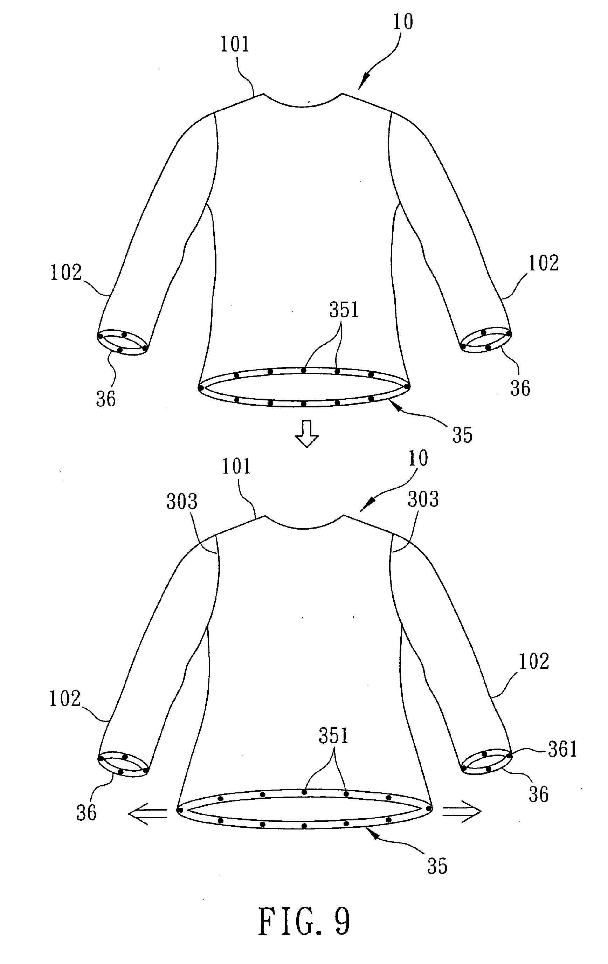

Referring to Fig. 9, a garment 10 made by the method of the present invention has a cuff 36 in each of the sleeve portions 102 and a waistband 35 in the body portion 101. According to the present invention, the forming of the cuff 36 includes the steps of providing a turned-up fold at one end of the sleeve portion 102, and providing a plurality of heat-sealed points 361 that are spaced apart from each other along the length of the turned-up fold to prevent the turned-up fold from unfolding. The forming of the waistband 35 is similar to that for forming the cuffs 36. The cuffs 36 and the waistband 35 can elastically fit the wrists and the waist of the user, respectively. By the provision of the cuffs 36 and the waistband 35, cold air entering the garment 10 through the cuffs 36 and the waistband 35 can be greatly reduced.

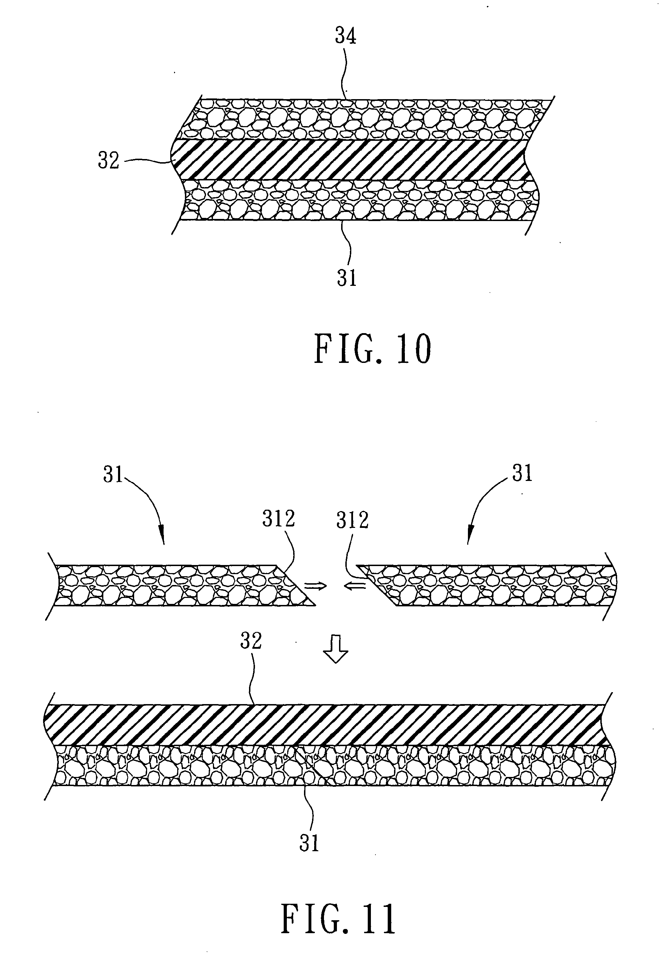

Referring to Fig. 10, the multi-layered material for the sheet segments 30 can further include an additional foamed layer 34 made from a foamed thermoplastic polyurethane (TPU) sheet. The non-foamed TPU sheet 32 has outer and inner surfaces respectively melt bonded to the additional foamed layer 34 and the first foamed TPU layer 32. Therefore, the multi-layered material has a rough outer surface, good shock-absorbing properties, and high resistance to impact and abrasion.

Referring to Fig. 11, each of the foamed layers 31 has a beveled edge face 312 at a connection end thereof. The beveled edge faces 312 are placed in abutment with each other, and then heat sealed together. After heat-sealing, the first non-foamed layer 32 is disposed over the heat-sealed seam of the foamed layers 31 and is bonded to the foamed layers 31.

Optionally, functional particles, such as ceramic particles capable of radiating far-infrared rays or silver particles capable of removing odor and destroying bacteria, can be added into the raw materials of the foamed layer 31 and the first and second non-foamed layers 32, 33.

The clothing made according to the present invention may be a swimming suit, a diving suit, a snowsuit, a suit for mountaineering, etc.

## Claims

1. A method of making an article of clothing, comprising:
providing a plurality of sheet segments (30) each of which is made of a multi-layered material that includes a thermoplastic foamed layer (31), and a thermoplastic first non-foamed layer (32) laminated on the foamed layer (31), each of the sheet segments (30) having at least one connection end (301); and
assembling the sheet segments (30) to form the clothing by heat-sealing the connection ends (301) of the sheet segments (30), thereby forming heat-sealed seams (303) in the clothing.

2. The method of Claim 1, wherein the first non-foamed layer (32) is made from a non-foamed thermoplastic polyurethane sheet, and the foamed layer (31) is made from a foamed thermoplastic polyurethane sheet.

3. The method of Claim 1, wherein the multi-layered material further includes a thermoplastic second non-foamed layer (33), the foamed layer (31) being disposed between the first and second non-foamed layers (32, 33)

4. The method of Claim 1, wherein the multi-layered material further includes a fabric layer (37) made from fibers, the foamed layer (31) being disposed between the fabric layer (37) and the first non-foamed layer (32).

5. The method of Claim 1, further comprising embossing the multi-layered material to form an embossed pattern (24) in at least one of the sheet segments (30) before the sheet segments (30) are assembled.

6. The method of Claim 1, wherein the clothing has at least one sleeve portion, the method further comprising forming a cuff (36) in the sleeve portion (102), the forming of the cuff (36) including the steps of providing a turned-up fold at one end of the sleeve portion (102) , and providing a plurality of heat-sealed points (361) that are spaced apart from each other along the length of the turned-up fold to prevent the turned-up fold from unfolding.

7. The method of Claim 1, further comprising the step of providing the connection ends (301) of at least two of said sheet segments (30) with beveled edge faces (302) , abutting the beveled edge faces (302) against each other, and heat-sealing the beveled edge faces (302) .

8. An article of clothing made according to the method of Claim 1, comprising a plurality of sheet segments (30) made of a multi-layered material that includes a thermoplastic foamed layer (31) , and a thermoplastic first non-foamed layer (32) laminated on said foamed layer (31); and heat-sealed seams (303) where said sheet segments (30) are interconnected to form said clothing.

9. The clothing of Claim 8, which has no stitch seams.

10. The clothing of Claim 8, wherein said first non-foamed layer (32) is made from a non-foamed thermoplastic polyurethane sheet, and said foamed layer (31) is made from a foamed thermoplastic polyurethane sheet.

11. The clothing of Claim 8, wherein said multi-layered material further includes a thermoplastic second non-foamed layer (33), said foamed layer (31) being disposed between said first and second non-foamed layers (32, 33).

12. The clothing of Claim 8, wherein said multi-layered material further includes a fabric layer (37) made from fibers, said foamed layer (31) being disposed between said fabric layer (37) and said first non-foamed layer (32).

13. The clothing of Claim 8, wherein said multi-layered material further includes an additional foamed layer (34), said first non-foamed layer (32) being disposed between said foamed layer (31) and said additional foamed layer (34).

14. The clothing of Claim 8, wherein said multi-layered material has an embossed pattern (24).

15. The clothing of Claim 8, further comprising at least one sleeve portion (102) that has one end provided with a turned-up fold, and a plurality of heat-sealed points (361) that are spaced apart from each other along the length of said turned-up fold to prevent said turned-up fold from unfolding.
